# EUROPÄISCHE PATENTSCHRIFT

(11) **EP 1 797 342 B1**
(45) Veröffentlichungstag und Bekanntmachung des Hinweises auf die Patenterteilung: **28.07.2010**
(21) Anmeldenummer: 05799199.4
(22) Anmeldetag: 07.10.2005
(51) Int. Cl.: F16C 1/10, F16C 1/12, G05G 7/02, G05G 7/04

(54) **TASTE MIT SEILZUG**
BUTTON COMPRISING A CABLE PULL
TOUCHE COMMANDEE PAR CABLE

(30) Priorität: 08.10.2004 DE 102004049435
(43) Veröffentlichungstag der Anmeldung: 20.06.2007
(73) Patentinhaber: ZF FRIEDRICHSHAFEN Aktiengesellschaft, 88038 Friedrichshafen (DE)
(72) Erfinder: MEYER, Jörg, 49419 Wagenfeld (DE); GIEFER, Andreas, 49448 Lemförde (DE); KLIEMANNEL, Wolfgang, 49448 Lemförde (DE); RAKE, Ludger, 49356 Diepholz (DE)
(86) Internationale Anmeldenummer: PCT/DE2005/001798
(87) Internationale Veröffentlichungsnummer: WO 2006/039897

(56) Entgegenhaltungen:
- EP-A- 0 285 299
- EP-A- 1 455 039
- DE-A1- 3 307 541
- DE-A1- 3 405 892
- GB-A- 2 214 593

## Beschreibung

Die Erfindung betrifft eine Drucktasteneinrichtung zu Betätigung eines technischen Systems nach dem Oberbegriff des Patentanspruchs 1.

Drucktasten bzw. Drucktasteneinrichtungen der eingangs genannten Art kommen beispielsweise, keineswegs jedoch ausschließlich, bei Kraftfahrzeugen im Fahrgastraum bzw. im Griffbereich des Fahrers zum Einsatz. Derartige Drucktasten dienen dabei der Betätigung unterschiedlichster technischer Systeme bzw. Einrichtungen am Kraftfahrzeug, wie beispielsweise Klimaanlage, Fensterheber, Sitzverstellung und dergleichen mehr.

Häufig wird durch derartige Drucktasten ein elektrischer Kontakt betätigt und durch das so erzeugte elektrische Signal die vorgesehene Funktion des zu steuernden Systems aktiviert. Die relative räumliche Anordnung von zu steuerndem technischem System und Drucktaste ist in einem solchen Fall der elektrischen Anbindung der Drucktaste an das zu steuernde System aufgrund der weitgehend freien Verlegbarkeit der flexiblen elektrischen Anbindung nahezu beliebig. Aus demselben Grund problemlos ist der Ausgleich allfälliger Maßtoleranzen bezüglich der Abstände zwischen der Drucktaste und dem zu steuernden technischen System, insbesondere falls Drucktaste und technisches System auf unterschiedlichen mechanischen Trägern angeordnet bzw. montiert sind.

Das Gesagte trifft jedoch insbesondere dann nicht zu, wenn keine elektrische Verbindung zwischen Drucktaste und zu steuerndem technischem System vorliegt, sondern das technische System vielmehr in mechanischer Verbindung mit der Drucktaste steht.

Zwar stellen Toleranzen bei der Anordnung von Drucktaste und zu steuerndem mechanischem System in ein und demselben Gehäuse bzw. auf ein und demselben mechanischen Träger in aller Regel keine großen Probleme dar. Sobald sich jedoch das zu steuernde technische System auf einem anderen Träger als die zur Steuerung dienende Drucktaste befindet, treten zumeist unvermeidlich Toleranzen zwischen dem Einbauort der Drucktaste und demjenigen des technischen Systems auf.

So sind Drucktasten am Kraftfahrzeug beispielsweise häufig im Bereich des Armaturenbretts oder in der Mittelkonsole angeordnet und jeweils im Wesentlichen im Bereich der Bedienoberfläche befestigt. Die damit gesteuerten technischen Systeme sind jedoch zumeist nicht an der Oberfläche von beispielsweise Armaturenbrett oder Mittelkonsole verankert, sondern vielmehr mit einem darunter angeordneten karosseriefesten Träger bzw. mit der Karosserie selbst verbunden.

Dabei sind jedoch oftmals erhebliche Toleranzen bezüglich des Abstands zwischen dem Einbauort der Drucktaste und demjenigen des zu steuernden Systems vorhanden. Diese Toleranzen liegen, beispielsweise aufgrund der erheblichen Größe von Bauteilen wie Armaturenbrett bzw. Mittelkonsole, aufgrund der für diese Bauteile verwendeten Kunststoffmaterialien wie auch aufgrund von Toleranzen der Karosseriestruktur selbst, sowie wegen weiterer Toleranzen der zum Zusammenbau verwendeten Montagesysteme, oftmals im Bereich von einigen Millimetern in jeder der drei Raumrichtungen.

Diese Abstandstoleranzen zwischen dem Montageort der Drucktaste und dem Montageort des zu steuernden technischen Systems müssen sodann mittels eines eigenen Einstellvorgangs aufwändig und damit kostenintensiv ausgeglichen werden, um die Funktion der Tastenbetätigung sicherzustellen.

Ferner können auch Wärmedehnungen auftreten, die bei den an und in einem Kraftfahrzeug auftretenden Temperaturunterschieden ganz erhebliche Größenordnungen annehmen. In einem solchen Fall leidet die Präzision der mechanischen Verbindung zwischen Drucktaste und zu steuerndem technischen System. Schlimmstenfalls kann es zu einer selbsttätigen Auslösung der Funktion des technischen Systems, bzw. zum Ausfall der Bedienbarkeit des technischen Systems, beispielsweise aufgrund von Wärmedehnungen kommen.

Darüber hinaus offenbart die EP 1 455 039 A2 eine Drucktasteneinrichtung mit einer Drucktaste, welche in einer gedrückten ersten Stellung über einen elektrischen Kontakt entgegen einer ersten Federkraft eine Funktion eines technischen Systems betätigt. Sofern beispielsweise die elektrische Versorgung ausgefallen ist, kann die Drucktaste entgegen einer zweiten Federkraft, welche größer als die erste Federkraft ist, weiter durchgedrückt werden und betätigt dabei über einen Umlenkhebel eine Seilzugeinrichtung, welche wiederum das technische System betätigt. Nachteilig hieran ist, dass der Bediener die Notvorrichtung erst nach Aufbringen einer erhöhten Kraft betätigen kann, wobei er zunächst eine Rückmeldung erhalten muss, dass das elektrische System ausgefallen ist und er die Notvorrichtung betätigen muss. Bei sicherheitsrelevanten technischen Systemen führt dies zu einem nicht unerheblichen Zeitverlust, der zu kritischen Situationen führen kann. Zudem wird ein größrer Bauraum benötigt, da sich der Betätigungsweg hinsichtlich der Normalvorrichtung und der Notvorrichtung addieren.

Mit diesem Hintergrund ist es Aufgabe der vorliegenden Erfindung, eine Drucktasteneinrichtung zu schaffen, mit der sich die genannten Nachteile des Standes der Technik überwinden lassen. Insbesondere soll die Drucktasteneinrichtung eine mechanisch getrennte Anordnung von Drucktaste und zu steuerndem technischen System erlauben. Dabei soll eine Beeinträchtigung der Betätigung des technischen Systems über die Drucktaste bzw. eine Beeinträchtigung der Präzision der Drucktasteneinrichtung durch Toleranzen zwischen den Montageorten von Drucktaste und technischem System auf einfache Weise dauerhaft vermieden werden, wodurch die Montage erleichtert, Montagekosten eingespart und die dauerhafte Betriebssicherheit und Wartungsfreiheit der Drucktasteneinrichtung gewährleistet werden soll.

Diese Aufgabe wird durch eine Drucktasteneinrichtung mit den Merkmalen des Patentanspruchs 1 gelöst. Bevorzugte Ausführungsformen sind Gegenstand der Unteransprüche.

Die erfindungsgemäße Drucktasteneinrichtung dient in an sich zunächst bekannter Weise zur Betätigung eines technischen Systems, bzw. zur Auslösung einer Funktion an einem technischen System, insbesondere bei einem Kraftfahrzeug. In ebenfalls bekannter Weise umfasst die Drucktasteneinrichtung zumindest eine Drucktaste sowie eine Halterungseinrichtung. In der Halterungseinrichtung ist die Drucktaste so angeordnet, dass sie zwischen einer Neutralstellung und einer Betätigungsstellung hin- und herbewegbar ist.

Erfindungsgemäß zeichnet sich die Drucktasteneinrichtung jedoch dadurch aus, dass zwischen der Drucktaste und dem technischen System eine flexible Seilzugeinrichtung zur Übertragung des Betätigungssignals von der Drucktaste zum technischen System angeordnet ist, wobei die Drucktasteneinrichtung einen von der Drucktaste betätigbaren elektrischen Kontakt, angeordnet insbesondere im Bereich der Drucktasteneinrichtung, umfasst. Dabei ist der elektrische Kontakt ebenfalls mit dem zu steuernden technischen System verbunden und zur Steuerung derselben Funktion des technischen Systems vorgesehen, die auch mittels der Seilzugeinrichtung gesteuert werden kann.

Auf diese Weise lässt sich eine Reihe von weiteren Vorteilen realisieren. So kann dank des zusätzlichen elektrischen Kontakts die Betätigung des zu steuernden Systems im Normalbetrieb beispielsweise mittels des elektrischen Kontakts erfolgen, während die mechanische Verbindung zwischen der Drucktaste und dem zu steuernden System mittels der Seilzugeinrichtung eine Redundanz-Rückfallebene darstellt, die eine sichere Betätigung des zu steuernden Systems auch bei Ausfall der elektrischen Funktion gewährleistet.

Eine andere Möglichkeit des Einsatzes dieser Ausführungsform der Erfindung liegt beispielsweise darin, dass die mechanische Verbindung zwischen der Drucktaste und dem zu steuernden System mittels der Seilzugeinrichtung dann zur Betätigung des zu steuernden Systems herangezogen werden kann, wenn keine elektrische Energie zur Verfügung steht. Dies kann beispielsweise bei abgezogenem Zündschlüssel oder bei abgeschalteter Zündung der Fall sein. Wird die Zündung wieder eingeschaltet, oder steht die elektrische Energie auf andere Weise wieder zur Verfügung, so kann die Betätigung des zu steuernden Systems wieder über den im Bereich der Drucktasteneinrichtung angeordneten elektrischen Kontakt erfolgen.

Aufgrund der Flexibilität der Seilzugeinrichtung stellen auch größere Toleranzen des Abstands zwischen den Einbauorten von Drucktaste und technischem System, ebenso wie beispielsweise temperaturbedingte Wärmeausdehnungen und Abstandsänderungen zwischen Drucktasteneinrichtung und technischem System keinerlei Problem mehr dar. Vielmehr werden solche Toleranzen oder Abstandsänderungen durch die flexible Seilzugeinrichtung ohne weiteres aufgenommen und ausgeglichen, ohne dass dabei die Schaltpräzision der Drucktaste oder die Sicherheit der Betätigung des technischen Systems beeinträchtigt wäre.

Für die Verwirklichung der Erfindung ist es zunächst unerheblich, welche Art und Ausführung die Seilzugeinrichtung aufweist, solange Veränderungen der Relativposition von Drucktasteneinrichtung und zu steuerndem technischem System keine Veränderungen in der Schaltposition und -Präzision von Drucktaste und technischem System erzeugen. Diese Bedingung erfüllen insbesondere solche Seilzugeinrichtungen, die sich aus einem Innenzug und einer Außenhülle zusammensetzen, da hierbei sowohl die Aktionskräfte bei der Betätigung der Drucktaste (über den Innenzug) als auch die Reaktionskräfte (über die Außenhülle) koaxial übertragen werden.

Gemäß der Ausführungsform der Erfindung umfasst die Seilzugeinrichtung nach Art eines Bowdenzugs einen Seilzug zur Übertragung von Zugkräften. Diese Ausführungsform besitzt den Vorteil des einfachen und kostengünstigen Aufbaus sowie einer hohen Zuverlässigkeit. Die Rückstellung der Seilzugeinrichtung sowie der Mechanismen von Drucktasteneinrichtung sowie technischem System nach der Betätigung erfolgt dabei beispielsweise mittels einer oder mehrerer Rückstellfedern, wobei zumindest eine Rückstellfeder im Bereich des technischen Systems angeordnet ist, um von dort aus, nach einer Betätigung der Drucktaste, den Seilzug sowie gegebenenfalls auch die Betätigungsmechanismen im technischen System sowie in der Drucktasteneinrichtung wieder in die Ausgangsposition zurückzubewegen.

Gemäß einer alternativen Ausführungsform der Erfindung umfasst die Seilzugeinrichtung einen flexiblen Draht zur Übertragung von Zug- und/oder Druckkräften zwischen der Drucktasteneinrichtung und dem gesteuerten technischen System. Eine Seilzugeinrichtung mit einem flexiblen Draht, der insbesondere auch eine Übertragung von Druckkräften erlaubt, weist verschiedene Vorteile auf. So kann damit beispielsweise die Gestaltung der Drucktasteneinrichtung dergestalt vereinfacht werden, dass die bei der Betätigung der Drucktaste ausgeübte Druckkraft unmittelbar auf den flexiblen Draht übertragen wird. Damit kann die sonst notwendige Umwandlung der an der Drucktaste anfallenden Druckkraft in eine mit einem Seilzug kompatible Zugkraft entfallen. Alternativ oder zusätzlich dazu weist diese Ausführungsform auch den Vorteil auf, dass der gesamte Betätigungsmechanismus einschließlich Drucktaste und Seilzugeinrichtung, sowie gegebenenfalls einschließlich der im gesteuerten System bewegten Betätigungselemente, mit nur einer einzigen Rückstellfeder aus der Betätigungsstellung in die Ruhestellung zurück bewegt werden kann, wobei die Druckfeder wahlweise im Bereich der Drucktasteneinrichtung oder im Bereich des zu steuernden Systems angeordnet sein kann.

Gemäß der Ausführungsform der Erfindung ist an der Halterungseinrichtung der Drucktasteneinrichtung ein Umlenkhebel schwenkbeweglich angeordnet. Der Umlenkhebel dient zur Umwandlung der über die Drucktaste eingeleiteten Druckkräfte in Zugkräfte, die insbesondere zur Betätigung eines Seilzugs herangezogen werden können. Auf diese Weise kann der besonders kostengünstige, jedoch nur zur Übertragung von Zugkräften einsetzbare Seilzug zur Übertragung der auf die Drucktaste ausgeübten Druckkräfte zu dem zu steuernden System verwendet werden.

Nach weiteren bevorzugten Ausführungsformen der Erfindung umfasst die Drucktasteneinrichtung eine zwischen der Halterungseinrichtung und der Drucktaste bzw. zwischen der Halterungseinrichtung und dem Umlenkhebel angeordnete Rückstellfeder. Auf diese Weise wird die Drucktaste und/oder der Umlenkhebel unmittelbar nach einer Betätigung der Drucktaste wieder aus der Betätigungsposition in die Ruheposition zurückbewegt.

Im Folgenden wird die Erfindung anhand lediglich Ausführungsbeispiele darstellender Zeichnungen näher erläutert. Dabei zeigt:
- **Fig. 1**: in schematischer Darstellung ein Beispiel einer Drucktasteneinrichtung mit Seilzug sowie mit zu steuerndem technischem System nach dem Stand der Technik in teilweise geschnittener Seitenansicht;
- **Fig. 2**: in einer **Figur 1** entsprechenden Darstellung und Ansicht die Drucktasteneinrichtung gemäß **Figur 1** im Betätigungszustand; und
- **Fig. 3**: in einer **Figur 1** und **2** entsprechenden Darstellung und Ansicht eine Ausführungsform einer erfindungsgemäßen Drucktasteneinrichtung mit elektrischem Kontakt.

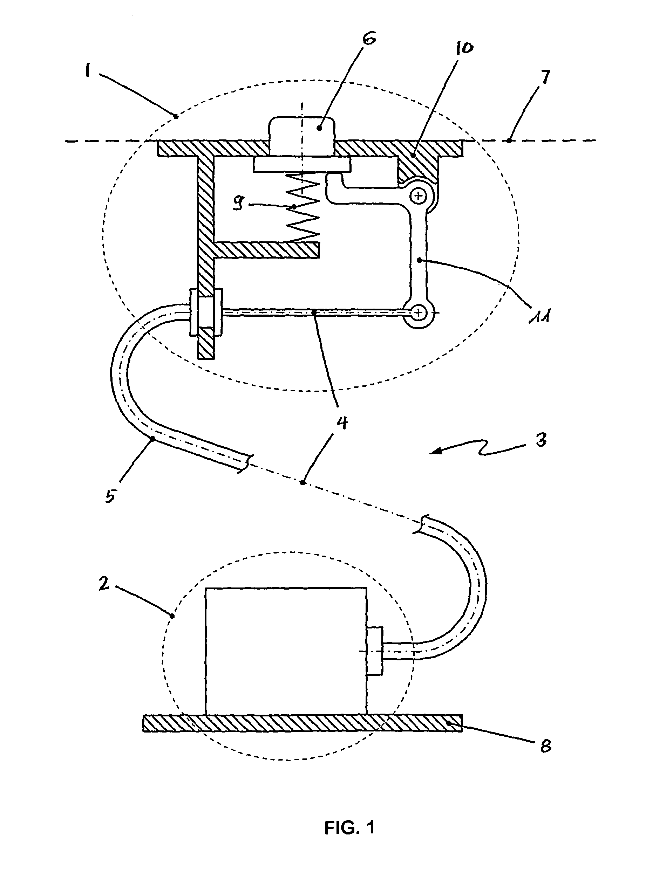

**Figur 1** zeigt schematisch ein Beispiel einer Drucktasteneinrichtung gemäß dem Stand der Technik. Man erkennt zunächst einmal die Drucktasteneinrichtung 1, das lediglich schematisch angedeutete zu steuernde System 2, sowie die Seilzugeinrichtung 3. Die Seilzugeinrichtung 3 setzt sich aus einem flexiblen Zugseil und einer ebenfalls flexiblen Außenhülle 5, die gemeinsam einen Seilzug 4 bilden, zusammen und dient der Weiterleitung des über die Drucktaste 6 initiierten Schaltbefehls an das zu steuernde System 2.

Da sich sowohl die Außenhülle 5 als auch das Zugseil mit ihren jeweiligen Enden an der Drucktasteneinrichtung 1 bzw. an dem zu steuernden System 2 abstützen, führe Veränderungen der Relativposition zwischen Drucktasteneinrichtung 1 und zu steuerndem System 2 zu keinen Veränderungen der Relativposition von Außenhülle 5 und Zugseil. Damit bleiben derartige Positionsveränderungen zwischen Drucktasteneinrichtung 1 und zu steuerndem System 2 jedoch auch ohne Auswirkung auf die Schaltpräzision der Drucktasteneinrichtung 1 bzw. auf die Schaltposition des zu steuernden Systems 2.

Es ist daher ohne weiteres möglich, die Drucktasteneinrichtung 1 beispielsweise im Bereich des Armaturenbretts oder der Mittelkonsole 7 eines Kraftfahrzeugs anzuordnen und mit dem Armaturenbrett oder der Mittelkonsole 7 zu verbinden, während das zu steuernde System 2 beispielsweise am Bodenblech 8 des Kraftfahrzeugs unterhalb der Mittelkonsole 7 angeordnet sowie auch mit dem Bodenblech 8 verbunden sein kann. Die Toleranzen des Abstands zwischen der Mittelkonsole 7 und dem Bodenblech 8 können aufgrund der Flexibilität der Seilzugeinrichtung 3 dann ohne weiteres ausgeglichen werden, ohne dass dies Auswirkungen auf die Schaltpräzision der Drucktasteneinrichtung 1 zur Folge hätte.

Auch entfallen hierdurch die aufwändigen Einstellungsarbeiten, die zum Ausgleich der Abstandtoleranzen sonst notwendig würden. Ebenso ohne Auswirkung auf die Schaltpräzision und Zuverlässigkeit der Drucktasteneinrichtung bleiben etwaige Veränderungen der Relativposition von Drucktasteneinrichtung 1 und zu steuerndem System 2 während des Betriebs des Kraftfahrzeugs, beispielsweise aufgrund von Wärmeausdehnungen oder dergleichen.

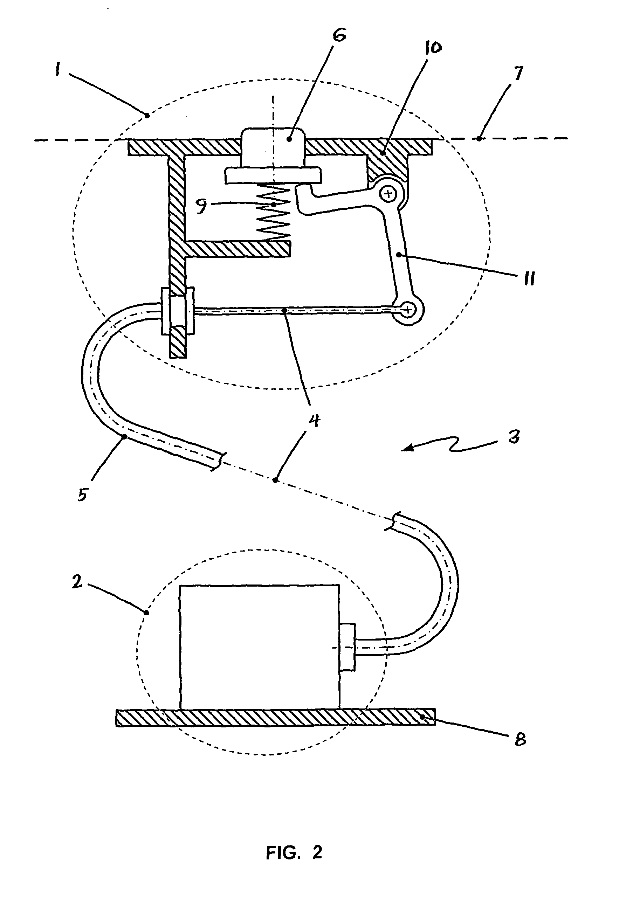

**Figur 2** zeigt die Drucktasteneinrichtung 1 gemäß **Figur 1** im Moment der Betätigung der Drucktaste 6. Man erkennt, dass die Drucktaste 6 entgegen der Rückstellkraft der Rückstellfeder 9 gegenüber der Halterungseinrichtung 10 aus ihrer Ruheposition gemäß **Figur 1** in die Betätigungsposition gemäß **Figur 2** bewegt ist. Dies führt zu einer Verschwenkung des Umlenkhebels 11, wodurch wiederum das Zugseil der Seilzugeinrichtung 3 unter Zugspannung gesetzt bzw. gegenüber der Außenhülle 5 bewegt wird, was zu einer dementsprechenden Betätigung des Systems 2 führt. Die Rückstellung der Drucktasteneinrichtung 1, der Seilzugeinrichtung 3 sowie der entsprechenden (nicht dargestellten) Betätigungsteile des technischen Systems 2 aus der Betätigungsposition gemäß **Figur 2** in die Ausgangsposition gemäß **Figur 1** erfolgt anhand der Rückstellfeder 9 sowie gegebenenfalls durch eine weitere (ebenfalls nicht dargestellte) Rückstellfeder im Bereich des Systems 2.

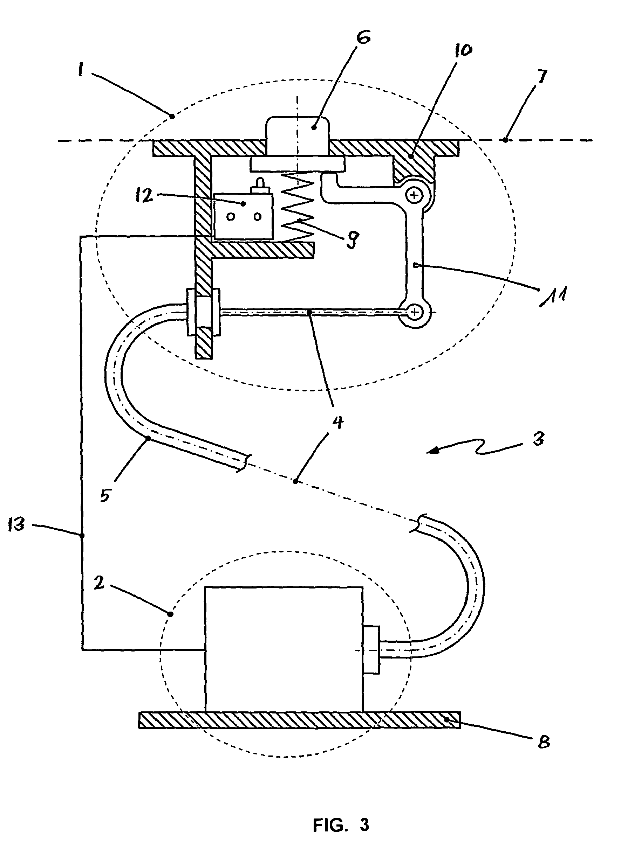

**Figur 3** zeigt eine Ausführungsform einer erfindungsgemäßen Drucktasteneinrichtung 1 mit zu steuerndem System 2 sowie mit Seilzugeinrichtung 3. Die Ausführungsform gemäß **Figur 3** unterscheidet sich von der Ausführungsform gemäß **Figur 1** und **2** durch den zusätzlichen elektrischen Kontakt 12, der mittels der elektrischen Verbindung 13, ebenso wie die Seilzugeinrichtung 3, mit dem zu steuernden System 2 in Verbindung steht. Wie bereits weiter oben ausgeführt, dient bei der Ausführungsform gemäß **Figur 3** die Seilzugeinrichtung 3 insbesondere als mechanische Rückfallebene für die elektrische Schaltverbindung 12, 13, beispielsweise bei Ausfall der elektrischen Verbindung 12, 13, oder zu Zeitpunkten, zu denen keine elektrische Energie zur Verfügung steht.

Im Ergebnis wird somit deutlich, dass dank der Erfindung die Zuverlässigkeit und Ausfallsicherheit von Betätigungssystemen mit Drucktasten auf einfache und kostensparende Weise verbessert werden kann. Dabei wird dank der Erfindung insbesondere die ansonsten erforderliche aufwändige und damit teure Einstellung der mechanischen Verbindung zwischen Drucktaste und zu steuerndem System infolge unvermeidlicher Maßtoleranzen beseitigt. Auch im Betrieb auftretende Abstands- oder Lageänderungen infolge von Wärmeausdehnungen haben dank der Erfindung keinerlei Auswirkungen mehr auf Schaltpräzision und Zuverlässigkeit der Betätigungseinrichtung.

Die Erfindung leistet damit einen erheblichen Beitrag zur Verbesserung von Betätigungssystemen insbesondere am Kraftfahrzeug. Dies kommt nicht zuletzt auch der Verbesserung der Fahrzeugsicherheit, der Kosteneffektivität in der Produktion sowie einer verbesserten Systemtechnologie am Kraftfahrzeug zugute.

## Patentansprüche

1. Drucktasteneinrichtung (1) zur Betätigung eines technischen Systems (2), insbesondere am Kraftfahrzeug, die Drucktasteneinrichtung (1) umfassend zumindest eine Drucktaste (6), eine Halterungseinrichtung (10), in der die Drucktaste (6), zwischen einer Neutralstellung und einer Betätigungsstellung bewegbar, angeordnet ist, sowie eine flexible Seilzugeinrichtung (3), wobei zwischen Drucktaste (6) und technischem System (2) eine die flexible Seilzugeinrichtung (3) zur Signalübertragung angeordnet ist, wobei an der Halterungseinrichtung (10) ein Umlenkhebel (11) zur Umwandlung der über die Drucktaste (6) eingeleiteten Druckkräfte in Zugkräfte schwenkbeweglich angeordnet ist,
mit einem mittels einer Drucktaste (6) betätigbaren elektrischen Kontakt (12), welcher mit dem technischen System (2) verbindbar ist und über welchen dieselbe Funktion des technischen Systems (2) betätigbar ist, wie über die Seilzugeinrichtung (3) in der Betätigungsstellung der Drucktaste (6),
**dadurch gekennzeichnet, dass** der elektrische Kontakt (12) unmittelbar mit der Halterungseinrichtung (10) verbunden ist.

2. Drucktasteneinrichtung nach Anspruch 1,
**dadurch gekennzeichnet, dass** die Seilzugeinrichtung (3) nach Art eines Bowdenzugs einen Seilzug (4) zur Übertragung von Zugkräften umfasst.

3. Drucktasteneinrichtung nach Anspruch 1,
**dadurch gekennzeichnet, dass** die Seilzugeinrichtung (3) einen flexiblen Draht zur Übertragung von Zug- und/oder Druckkräften umfasst.

4. Drucktasteneinrichtung nach einem der Ansprüche 1 bis 3,
**gekennzeichnet durch** eine zwischen Halterungseinrichtung (10) und Drucktaste (6) angeordnete Rückstellfeder (9).

5. Drucktasteneinrichtung nach einem der Ansprüche 1 bis 4,
**gekennzeichnet durch** eine zwischen Halterungseinrichtung (10) und Umlenkhebel (11) angeordnete Rückstellfeder.

## Claims

1. Pushbutton device (1) for actuating a technical system (2), in particular on a motor vehicle, the pushbutton device (1) including at least one pushbutton (6), a mounting device (10), in which the pushbutton (6) is arranged and is movable between a neutral position and an actuation position, and a flexible cable device (3), the flexible cable device (3) being arranged between the pushbutton (6) and the technical system (2) for signal transmission, and a reversing lever (11) being arranged on the mounting device (10) so that it can move pivotingly, to convert the compressive forces introduced via the pushbutton (6) into tensile forces, with an electrical contact (12), which can be connected to the technical system (2), and which can be actuated by means of a pushbutton (6), and via which the same function of the technical system (2) can be actuated as via the cable device (3) in the actuation position of the pushbutton (6), **characterized in that** the electrical contact (12) is connected directly to the mounting device (10).

2. Pushbutton device according to Claim 1,
**characterized in that** the cable device (3), like a Bowden cable, includes a cable (4) to transmit tensile forces.

3. Pushbutton device according to Claim 1,
**characterized in that** the cable device (3) includes a flexible wire to transmit tensile and/or compressive forces.

4. Pushbutton device according to any one of Claims 1 to 3,
**characterized by** a return spring (9) which is arranged between the mounting device (10) and the pushbutton (6).

5. Pushbutton device according to any one of Claims 1 to 4,
**characterized by** a return spring which is arranged between the mounting device (10) and the reversing lever (11).

## Revendications

1. Dispositif à bouton-poussoir (1) pour commander un système technique (2), en particulier sur un véhicule automobile, le dispositif à bouton-poussoir (1) comprenant au moins un bouton-poussoir (6), un dispositif de support (10), dans lequel le bouton-poussoir (6) est aménagé de manière à pouvoir se déplacer entre une position neutre et une position de commande, ainsi qu'un dispositif de commande par câble flexible (3), dans lequel le dispositif de commande par câble flexible (3) est aménagé entre le bouton-poussoir (6) et le système technique (2) pour la transmission d'un signal, dans lequel un levier de renvoi (11) susceptible de convertir les forces de pression introduites par le bouton-poussoir (6) en forces de traction est aménagé en position pivotable sur le dispositif de support (10),
avec un contact électrique (12) actionnable au moyen d'un bouton-poussoir (6), qui peut être connecté au système technique (2) et par lequel peut être commandée la même fonction du système technique (2) que par le biais du dispositif de commande par câble (3) en position de commande du bouton-poussoir (6),
**caractérisé en ce que** le contact électrique (12) est connecté directement au dispositif de support (10).

2. Dispositif à bouton-poussoir selon la revendication 1,
**caractérisé en ce que** le dispositif de commande par câble (3), sous la forme d'un câble Bowden, comprend une commande par câble (4) pour transmettre des forces de traction.

3. Dispositif à bouton-poussoir selon la revendication 1,
**caractérisé en ce que** le dispositif de commande par câble (3) comprend un fil métallique flexible pour transmettre des forces de traction et/ou de pression.

4. Dispositif à bouton-poussoir selon l'une quelconque des revendications 1 à 3,
**caractérisé par** un ressort de rappel (9) aménagé entre le dispositif de support (10) et le bouton-poussoir (6).

5. Dispositif à bouton-poussoir selon l'une quelconque des revendications 1 à 4, **caractérisé par** un ressort de rappel aménagé entre le dispositif de support (10) et le levier de renvoi (11).
